**Europäisches Patentamt**

**European Patent Office**

**Office européen des brevets**

(19)

(11) Numéro de publication : **0 569 286 A1**

(12) # DEMANDE DE BREVET EUROPEEN

(21) Numéro de dépôt : **93401146.1**

(22) Date de dépôt : **04.05.93**

(51) Int. Cl.⁵ : **G06F 15/70,** G06F 15/80

(30) Priorité : **05.05.92 FR 9205502**

(43) Date de publication de la demande :
**10.11.93 Bulletin 93/45**

(84) Etats contractants désignés :
**DE ES FR GB IT NL SE**

(71) Demandeur : **THOMSON-CSF**
**51, Esplanade du Général de Gaulle**
**F-92800 Puteaux (FR)**

(72) Inventeur : **Desmouceaux, Jean**
**THOMSON-CSF, SCPI, BP 329**
**F-92402 Courbevoie Cedex (FR)**
Inventeur : **Regef, Jean-Luc**
**THOMSON-CSF, SCPI, BP 329**
**F-92402 Courbevoie Cedex (FR)**
Inventeur : **Dauvillier, Jérôme**
**THOMSON-CSF, SCPI, BP 329**
**F-92402 Courbevoie Cedex (FR)**

(74) Mandataire : **Benoit, Monique et al**
**THOMSON-CSF SCPI B.P. 329 50, rue**
**Jean-Pierre Timbaud**
**F-92402 Courbevoie Cédex (FR)**

(54) **Dispositif connexionniste de suivi de l'évolution d'une information entre au moins deux valeurs données et applications.**

(57)    La présente invention concerne un dispositif connexionniste permettant de suivre et de confirmer l'évolution cohérente d'une information entre au moins deux valeurs données.

Il comprend une couche de traitement constituée d'une pluralité d'unités (21) relatives à une des deux valeurs. Les unités (21) sont reliées entre elles et avec des cellules d'entrée (10) grâce à des connexions latérales (22) et inter-couches (12) de telle sorte que leur zone d'activation (26) soit une combinaison d'une donnée relative à une valeur de l'information à un instant courant, et d'une donnée relative à l'information à un instant précédent.

Des applications intéressantes concernent le calcul de vitesses ou la détection d'orientation d'objets à partir d'une séquence d'images très bruitées.

FIG.1

EP 0 569 286 A1

La présente invention concerne un dispositif connexionniste de suivi de l'évolution d'une information entre au moins deux valeurs données, et des applications particulières de ce dispositif au calcul de la vitesse d'objets à partir d'une séquence d'images, et à la détection d'orientation d'objets sur une image.

Dans les méthodes dites connexionnistes, on connaît différents types de réseaux neuronaux, chacun étant adapté à une application donnée: citons à titre d'exemples le perceptron multicouches qui, associé à une méthode d'apprentissage telle que la rétropropagation du gradient, permet de faire de la classification supervisée, ou encore les réseaux du type Kohonen, réalisant de l'auto-organisation (supervisée ou non).

Cependant, les structures des réseaux précédents ne s'adaptent pas bien à la résolution de nombreux problèmes de traitement de signal tels que la détection de mouvement à partir d'une séquence d'images très bruitées, et plus généralement la détection de changements d'états.

Plus précisément, un premier objet de la présente invention concerne un dispositif connexionniste de suivi de l'évolution d'une information entre au moins deux valeurs données à partir de variations temporelles de signaux d'entrée, caractérisé en ce qu'il comporte au moins:

- une couche d'entrée constituée d'une pluralité de cellules d'entrée indépendantes, recevant chacune une donnée relative à au moins un des signaux d'entrée à un instant t donné;
- une couche de traitement constituée d'une pluralité d'ensembles comprenant chacun deux unités relatives aux deux valeurs, chaque unité comportant une première et une seconde zones réceptrices, ainsi qu'une zone d'activation qui calcule une combinaison du contenu de la première et de la seconde zones réceptrices à l'instant t, les premières zones réceptrices des unités d'un même ensemble étant reliées univoquement à au moins une même cellule de la couche d'entrée par des connexions intercouches effectuant la transmission de ladite donnée dans les premières zones réceptrices, les secondes zones réceptrices étant reliées univoquement à la zone d'activation d'une unité dite antécédente d'au moins un autre ensemble et relative à la même valeur, par des connexions latérales effectuant chacune une combinaison du contenu de la première zone réceptrice à l'instant t et du contenu de la zone d'activation de l'unité antécédente à un instant précédent.

Un second objet de l'invention est une application du dispositif connexionniste au calcul de la vitesse d'objets à partir d'une séquence d'images, caractérisée en ce que ladite donnée est relative à une luminance, et en ce que chaque valeur correspond à une vitesse possible choisie dans un ensemble de vitesses prédéterminé.

Dans le cadre de cette application, l'invention prévoit deux variantes, l'une selon laquelle les signaux d'entrées sont constitués d'éléments relatifs à au moins un pixel de l'image courante brute, l'autre selon laquelle on effectue au préalable un prétraitement de type différentielle temporelle consistant à former des signaux d'entrée constitués chacun de la différence de luminance d'au moins un pixel de l'image courante et du pixel correspondant de l'image précédente.

Un troisième objet de l'invention est une application du dispositif connexionniste à la détection d'orientation d'objets à partir d'une seule image, caractérisée en ce que l'on présente plusieurs fois la même image séquentiellement, en ce que ladite donnée est relative à une luminance, et en ce que chaque valeur correspond à une orientation possible des objets dans un ensemble d'orientations prédéterminé.

De façon analogue à l'application précédente au calcul de vitesse, l'invention prévoit également deux variantes, l'une selon laquelle les signaux d'entrée sont constitués chacun d'éléments relatifs à au moins un pixel de l'image courante, l'autre selon laquelle on effectue au préalable un prétraitement du type différentielle spatiale consistant à former des signaux d'entrée constitués chacun d'une somme pondérée de la luminance d'au moins un pixel central et des luminances de pixels voisins.

L'invention sera mieux comprise au vu de la description suivante, faite en référence aux figures annexées:

- La figure 1 montre la structure du dispositif selon l'invention;
- Les figures 2a à 2d illustrent le fonctionnement du dispositif dans une application particulière;
- La figure 3 montre l'allure d'une fonction possible utilisée dans la combinaison non linéaire effectuée par une connexion latérale.

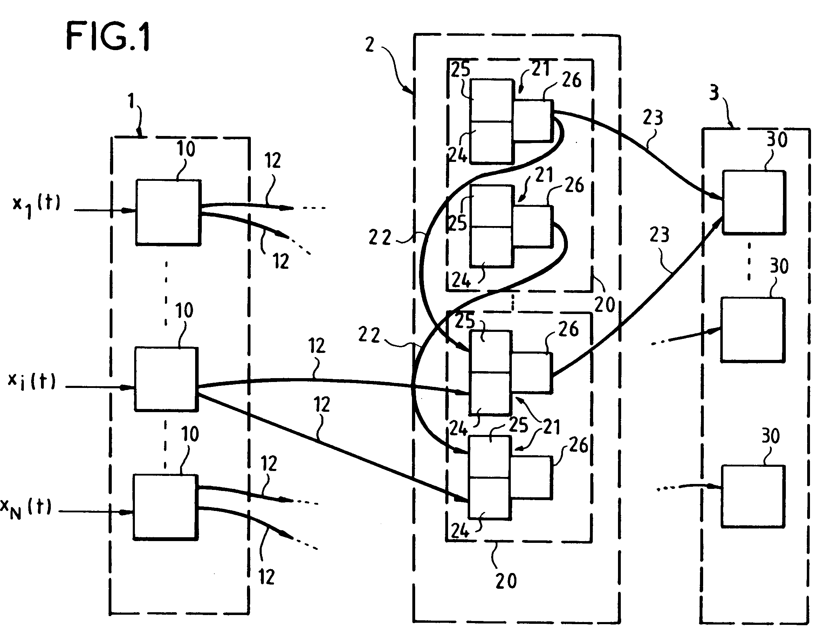

La figure 1 illustre la structure du dispositif connexionniste selon l'invention:

Le dispositif selon l'invention reçoit, au même instant, un nombre N de signaux d'entrée notés $x_i$ (t), pour l'entier i variant de 1 à N. Ces signaux peuvent par exemple provenir de capteurs positionnés à des zones différentes d'un espace donné, ou encore de traitements effectués au préalable.

En outre, il peut s'agir tout aussi bien de signaux de nature électrique, acoustique, thermique ou optique, selon le domaine d'application visé.

Le dispositif de l'invention comporte tout d'abord une couche d'entrée 1 constituée d'une pluralité de cellules d'entrée 10 indépendantes. Chaque cellule 10 comprend une information relative à un ou plusieurs signaux d'entrée au même instant. On peut comparer cette couche d'entrée 1 à une couche d'entrée de réseau de neurones classique, chaque cellule réalisant soit une fonction de seuillage, soit une mise en mémoire de ce qu'elle reçoit.

Le dispositif de l'invention comporte également une couche de traitement 2 chargée d'effectuer le suivi de l'évolution d'une information. L'information considérée peut être une température, une luminosité, une direction de mouvement, une vitesse...

Dans l'exemple de la figure 1, nous avons considéré qu'il y avait deux valeurs possibles pour cette information. A partir de cette hypothèse non limitative, la couche de traitement 2 doit être constituée, selon l'invention, d'une pluralité d'ensembles 20 comprenant chacun deux unités 21 relatives aux deux valeurs possibles. Chaque unité 21 de la couche intermédiaire comporte deux zones réceptrices 24, 25 et une zone d'activation 26.

Selon l'invention, les premières zones réceptrices 24 des unités 21 d'un même ensemble 2 sont reliées univoquement à au moins une même cellule 10 de la couche d'entrée par des connexions intercouches 12. Ces connexions intercouches 12 effectuent préférentiellement une fonction de transmission, linéaire ou non, de la donnée reçue par les cellules d'entrée dans les premières zones réceptrices 24. Il peut s'agir par exemple d'une fonction identité effectuant une simple recopie de cette donnée. Sur la figure 1, la cellule d'entrée 10 contenant l'information relative au signal d'entrée $x_l$ (t) est donc projetée sur deux unités 21 de la couche de traitement relatives aux deux valeurs possibles. L'information contenue à un instant t dans les premières zones réceptrices 24 des unités 21 qui sont reliées aux mêmes cellules d'entrée 10, est donc identique. En outre, selon une autre caractéristique de l'invention, chaque seconde zone réceptrice 25 d'une unité 21 est reliée univoquement par une connexion latérale 22 à la zone d'activation 26 d'une unité dite antécédente d'au moins un autre ensemble 2, cette unité antécédente étant relative à la même valeur. Chaque connexion latérale 22 effectue une combinaison, préférentiellement non linéaire, du contenu de la première zone réceptrice à l'instant t et du contenu de la zone d'activation 26 de l'unité antécédente à un instant précédent. Le contenu de la zone d'activation 26 d'une unité 21 donnée à l'instant t est lui-même égal à une combinaison, par exemple du type moyenne, du contenu de la première et de la seconde zone réceptrice de cette même unité au même instant. La contribution des connexions latérales 22 sur l'activation d'une unité 2 donnée permet de ne prendre en compte que les évolutions cohérentes de l'information traitée, et par conséquent d'éliminer tout ce qui pourrait provenir du bruit.

Le dispositif de l'invention peut en outre comporter une couche de sortie 3 constituée d'une pluralité de cellules de sortie 30. Chaque cellule de sortie 30 est reliée à au moins une zone d'activation 26 de la couche de traitement par une connexion 23, et effectue par exemple une comparaison du contenu de cette zone d'activation avec une valeur seuil prédéterminée. Les sorties de ces cellules 30 peuvent ensuite être exploitées de différentes manières: elles peuvent être visualisées, ou encore constituer les entrées d'autres traitements effectués par tous réseaux connexionnistes, bien que dans ce cas, il soit tout à fait possible d'utiliser directement la couche de traitement comme couche de sortie ou couche d'entrée.

Le fonctionnement du dispositif selon l'invention et ses avantages seront mieux compris dans les applications particulières qui vont être décrites ci-après.

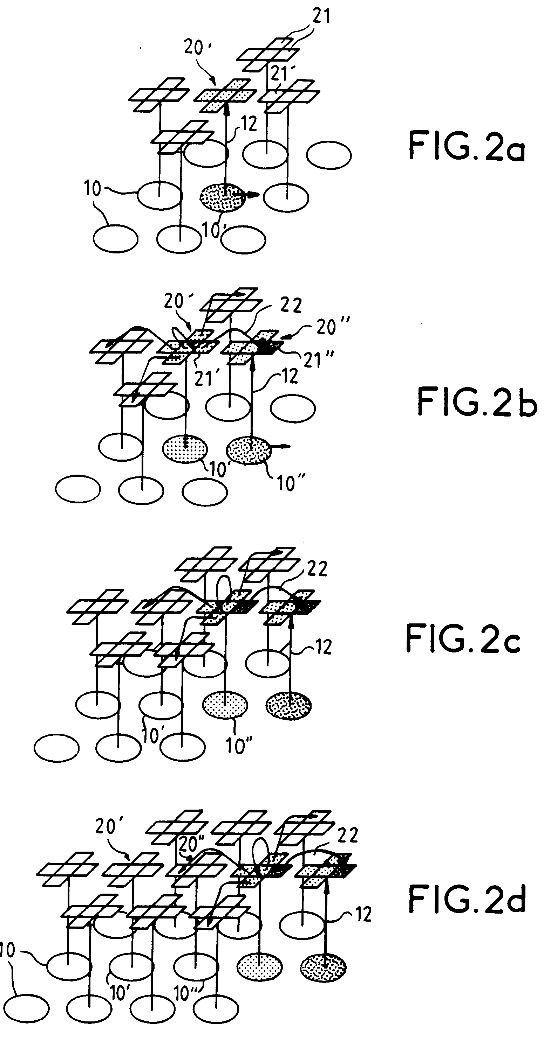

Une première application concerne le calcul de la vitesse d'objets à partir d'une séquence d'images, dont la description fait référence aux figures 2a à 2d.

Le problème posé dans cette application particulière est de détecter, à partir d'une séquence d'images généralement très bruitées, composées de pixels de luminances différentes, les mouvements cohérents d'objets, et d'en déduire leurs vitesses. On suppose pour simplifier que les objets peuvent se déplacer dans quatre directions possibles avec quatre vitesses correspondantes, les quatre directions indiquant sur l'image un mouvement vers le haut, vers le bas, vers la droite et vers la gauche. Les quatre vitesses correspondent à quatre valeurs possibles de l'information vitesse. Les signaux d'entrée du dispositif selon l'invention sont préférentiellement constitués de la différence de luminance d'au moins un pixel d'une image courante avec le pixel correspondant de l'image précédente. L'obtention de tels signaux peut être réalisée par tout dispositif de différentiation temporelle d'images, par exemple un dispositif de traitement rétinien de type Y.

Si l'on note $r_1(t)$, $r_2(t)$ et a(t) les contenus respectifs de la première zone réceptrice, de la seconde zone réceptrice et de la zone d'activation d'une unité u donnée, les hypothèses non limitatives des calculs menés par le dispositif dans notre exemple sont les suivantes :

$$\begin{cases} a(t) = \dfrac{r_1(t) + r_2(t)}{2} \\ r_2(t) = g\left(r_2(t)\right) \times a'(t - \Delta t) \end{cases}$$

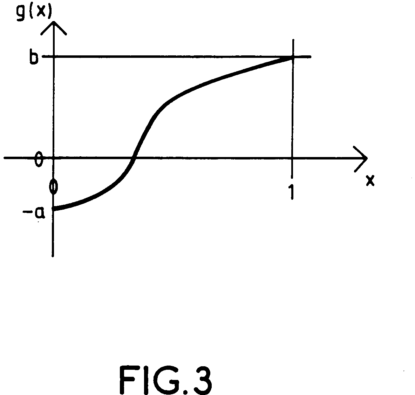

avec a' (t-Δt), le contenu de la zone d'activation d'une unité antécédente, à un instant précédent, et

g ($r_2$(t)) une fonction non linéaire dont l'allure est représentée sur la figure 3.

Dans un souci de simplification, les figures 2a à 2b montrent les étapes successives de fonctionnement du dispositif en réponse au mouvement d'un pixel vers la droite.

Sur ces figures, seules ont été représentées les couches d'entrée et de traitement du dispositif. La figure 2a correspond à l'état initial du dispositif, lequel possède une seule cellule d'entrée 10' recevant une donnée non nulle, telle que la luminance du pixel en mouvement. Cette donnée est transmise par l'intermédiaire des connexions représentées symboliquement par la flèche 12 à un ensemble 20' de la couche de traitement composé dans notre exemple de cinq unités 21 possibles, quatre pour les quatre vitesses de déplacement possibles, et une, non obligatoire, indiquant un déplacement nul. A l'instant suivant, comme illustré sur la figure 2b, le pixel s'est déplacé et la donnée correspondante apparaît dans la cellule d'entrée 10" qui transmet cette donnée à son tour à un ensemble 20". Or, l'unité 21 relative à la bonne vitesse de déplacement voit son activation renforcée, c'est-à-dire augmentée, par la connexion 22 reliant la zone d'activation de l'unité 21' avec sa propre zone d'activation. Sur les figures 2c et 2d, on peut voir que plus le mouvement du pixel est cohérent, plus l'activation de l'unité courante recevant l'information de la couche d'entrée va être renforcée. Ceci provient de la fonction g (r₂(t)) qui croît lorsque r₂(t) augmente, traduisant ainsi la confirmation d'un mouvement cohérent. Le contenu des différentes zones d'activation peut être transmis à des cellules de sortie (non représentées) qui effectuent un seuillage. Lorsque ce contenu dépasse la valeur seuil prédéterminée, la cellule de sortie correspondante confirme le mouvement cohérent et la vitesse du pixel.

La différentiation temporelle préalable des images n'est pas indispensable et le dispositif fonctionne également sans faire de prétraitement.

Une autre application intéressante du dispositif connexionniste selon l'invention concerne la détection d'orientation d'objets à partir d'une seule image. Dans ce cas, il est nécessaire de présenter plusieurs fois la même image séquentiellement à l'entrée du dispositif, afin que ce dernier puisse suivre l'évolution des orientations détectées. Ce suivi d'évolution doit conduire à la confirmation d'une orientation pour un objet de l'image. Les valeurs d'orientation possibles sont par exemple une orientation horizontale, verticale, oblique ...

De façon analogue à l'application précédemment décrite, il est possible de traiter directement les pixels de l'image présentée séquentiellement, ou alors, d'effectuer au préalable une différentielle, cette fois-ci spatiale, de l'image courante, consistant à former des signaux d'entrée constitués chacun d'une somme pondérée de la luminance d'au moins un pixel central et des luminance des pixels voisins.

Les deux applications précédemment décrites ne constituent en rien une limitation. Le dispositif selon l'invention présente un intérêt à chaque fois que l'on a besoin de confirmer l'évolution cohérente d'une information quelconque.

Les autres avantages du dispositif selon l'invention résident dans son grand degré de parallélisme intrinsèque, et dans son intégration facile dans tout système complexe comprenant des traitements connexionnistes, des traitements plus spécifiques du signal, et des traitements décisionnels.

L'implantation parallèle du dispositif selon l'invention est également très facile à réaliser.

## Revendications

1. Dispositif connexionniste de suivi de l'évolution d'une information entre au moins deux valeurs données, à partir de variations temporelles de signaux d'entrée, caractérisé en ce qu'il comporte au moins:
   - une couche d'entrée (1) constituée d'une pluralité de cellules d'entrée (10) indépendantes, recevant chacune une donnée relative à au moins un des signaux d'entrée à un instant t donné ;
   - une couche de traitement (2) constituée d'une pluralité d'ensembles (20) comprenant chacun deux unités (21) relatives aux deux valeurs, chaque unité comportant une première et une seconde zones réceptrices (24, 25), ainsi qu'une zone d'activation (26) qui calcule une combinaison du contenu de la première et de la seconde zones réceptrices à l'instant t, les premières zones réceptrices (24) des unités (21) d'un même ensemble (20) étant reliées univoquement à au moins une même cellule (10) de la couche d'entrée par des connexions intercouches (12) effectuant la transmission de ladite donnée dans les premières zones réceptrices, les secondes zones réceptrices (25) étant reliées univoquement à la zone d'activation d'une unité dite antécédente d'au moins un autre ensemble et relative à la même valeur, par des connexions latérales (22) effectuant chacune une combinaison du contenu de la première zone réceptrice à l'instant t et du contenu de la zone d'activation de l'unité antécédente à un instant précédent.

2. Dispositif selon la revendication 1, caractérisé en ce que la combinaison calculée par la zone d'activation est linéaire.

3. Dispositif selon la revendication 1, caractérisé en ce que les combinaisons effectuées par les connexions latérales sont non linéaires.

4. Dispositif selon l'une quelconque des revendications précédentes, caractérisé en ce qu'il comporte, en outre, une couche de sortie (3) constituée d'une pluralité de cellules (30) de sortie, chacune étant connectée à la zone d'activation d'au moins une unité de la couche de traitement, et effectuant une comparaison du contenu de la zone d'activation à une valeur seuil prédéterminée.

5. Application du dispositif connexionniste selon les revendications 1 à 4, au calcul de la vitesse d'objets à partir d'une séquence d'images, caractérisée en ce que ladite donnée est relative à une luminance, et en ce que chaque valeur correspond à une vitesse possible choisie dans un ensemble de vitesses prédéterminé.

6. Application du dispositif connexionniste selon la revendication 5, caractérisée en ce que les signaux d'entrées à l'instant t courant sont constitués chacun d'éléments relatifs à au moins un pixel de l'image courante.

7. Application du dispositif connexionniste selon la revendication 5, caractérisée en ce que l'on effectue au préalable une différentielle temporelle consistant à former des signaux d'entrée constitués chacun de la différence de luminances d'au moins un pixel de l'image courante et du pixel correspondant de l'image précédente.

8. Application du dispositif connexionniste selon les revendications 1 à 4, à la détection d'orientation d'objets à partir d'une seule image, caractérisée en ce que l'on présente plusieurs fois la même image séquentiellement, en ce que ladite donnée est relative à une luminance, et en ce que chaque valeur correspond à une orientation possible des objets dans un ensemble d'orientations prédéterminé.

9. Application du dispositif connexionniste selon la revendication 8, caractérisée en ce que les signaux d'entrée à l'instant t courant sont constitués chacun d'éléments relatifs à au moins un pixel de l'image courante.

10. Application du dispositif connexionniste selon la revendication 8, caractérisée en ce que l'on effectue, au préalable, une différentielle spatiale consistant à former des signaux d'entrée constitués chacun d'une somme pondérée de la luminance d'au moins un pixel dit central et des luminances des pixels voisins de ce pixel central.

FIG.1

$x_1(t)$

$x_i(t)$

$x_N(t)$

EP 0 569 286 A1

FIG.2a

FIG.2b

FIG.2c

FIG.2d

FIG.3

Office européen
des brevets

Numero de la demande

EP 93 40 1146

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PROCEEDINGS OF THE INTERNATIONAL SYMPOSIUM ON CIRCUITS AND SYSTEMS, NEW ORLEANS(US), 1-3 MAI 1990 ; IEEE ,NEW YORK (US) pages 2967 - 2970 , XP164161 T.H. YEAP ET AL. 'A hierarchical neural network for temporal pattern recognition' * page 2967, colonne de droite, ligne 3 - page 2968, colonne de gauche; figures 1,2 * | 1 | G06F15/70 G06F15/80 |
| A | IEEE PACIFIC RIM CONFERENCE ON COMMUNICATIONS, COMPUTERS AND SIGNAL PROCESSING, VICTORIA(CANADA) 1-2 JUIN 1989 , XP77439 M.Y. NIAMAT ET AL. 'applications of systolic array architectures to motion analysis studies' * le document en entier * | 1 | |
| | | | **DOMAINES TECHNIQUES RECHERCHES (Int. Cl.5)** |
| | | | G06F |

Le présent rapport a été établi pour toutes les revendications

| Lieu de la recherche | Date d'achèvement de la recherche | Examinateur |
|---|---|---|
| LA HAYE | 11 AOUT 1993 | CHATEAU J.P. |